# EUROPEAN PATENT APPLICATION

(11) **EP 4 101 663 A1**
(43) Date of publication of application: **14.12.2022**
(21) Application number: 21899300.4
(22) Date of filing: 30.04.2021
(51) Int. Cl.: B60C 23/12, B60C 23/00, B60C 23/04

(54) **AIR PRESSURE ADJUSTMENT DEVICE, AIR PRESSURE ADJUSTMENT METHOD, AND AIR PRESSURE ADJUSTMENT SYSTEM**

(71) Applicant: Pacific Industrial Co., Ltd., Ogaki-shi, Gifu 503-8603 (JP)
(72) Inventor: TSUJITA Yasuhisa, Ogaki-shi Gifu 5038603 (JP)
(74) Representative: Appleyard Lees IP LLP
(86) International application number: PCT/JP2021/017250
(87) International publication number: WO 2022/230192

(57) **Abstract**

An air pressure adjusting device includes a supplying device and a reception circuit configured to receive a detection signal that includes information indicating an air pressure of a tire. The supplying device includes a piston that supplies air to the tire by being moved by rotation of the tire. The air pressure adjusting device includes a switching unit and a controller. The switching unit is configured to be switched between a first state, in which the switching unit allows movement of the piston, and a second state, in which the switching unit prohibits movement of the piston. The controller is configured to control the switching unit. The controller is configured to obtain the information indicating the air pressure of the tire from the detection signal received by the reception circuit, switch the switching unit to the second state when the air pressure of the tire is greater than or equal to a threshold, and switch the switching unit to the first state when the air pressure of the tire is less than the threshold.

## Description

### TECHNICAL FILED

The present disclosure relates to an air pressure adjusting device, an air pressure adjusting method, and an air pressure adjusting system.

### BACKGROUND ART

Patent Literature 1 discloses a vehicle equipped with an air pressure adjusting device. The air pressure adjusting device uses rotation of a tire to adjust the air pressure of the tire. The air pressure adjusting device disclosed in Patent Literature 1 includes a compressor. The compressor supplies air to the tire to adjust the air pressure of the tire.

### CITATION LIST

### Patent Literature

Patent Literature 1: Japanese Laid-Open Patent Publication No. 2009-220616

### SUMMARY OF INVENTION

### Technical Problem

Some air pressure adjusting devices use movement of a piston caused by rotation of a tire to supply air to the tire. When a piston is used, the piston is moved repeatedly by rotation of the tire. This wears the piston.

### Solution to Problem

In a first aspect of the present disclosure, an air pressure adjusting device is provided that includes a supplying device, a reception circuit, a switching unit, and a controller. The supplying device includes a piston. The piston is configured to supply air to a tire of a vehicle by being moved by rotation of the tire. The reception circuit is configured to receive a detection signal transmitted from an air pressure monitoring device mounted on the vehicle. The detection signal includes information indicating an air pressure of the tire. The switching unit is configured to be switched between a first state, in which the switching unit allows movement of the piston, and a second state, in which the switching unit prohibits movement of the piston. The controller is configured to control the switching unit. The controller is configured to obtain the information indicating the air pressure of the tire from the detection signal received by the reception circuit. The controller is also configured to switch the switching unit to the second state when the air pressure of the tire is greater than or equal to a threshold. The controller is further configured to switch the switching unit to the first state when the air pressure of the tire is less than the threshold.

When the air pressure of the tire is greater than or equal to the threshold, the controller prohibits movement of the piston. Prohibition of movement of the piston suppresses the wear of the piston due to movement of the piston.

In the above-described air pressure adjusting device, the controller may be configured to transmit to the air pressure monitoring device a request signal that requests transmission of the detection signal. The controller may also be configured to perform a reception operation for a predetermined amount of time after transmitting the request signal. The controller obtains the information indicating the air pressure of the tire in the reception operation.

In the above-described air pressure adjusting device, the air pressure monitoring device may include a transmitter provided in each tire and a receiver. The transmitter is configured to transmit the detection signal. The receiver is configured to receive the detection signal. The controller is configured to transmit the request signal to the transmitter.

In the above-described air pressure adjusting device, the detection signal may include a first detection signal and a second detection signal. The air pressure monitoring device may include a transmitter provided in each tier and a receiver. The transmitter is configured to transmit the first detection signal. The receiver is configured to receive the first detection signal. The controller is configured to transmit the request signal to the receiver. The receiver includes a transmission circuit that is configured to transmit the second detection signal upon reception of the request signal.

In the above-described air pressure adjusting device, the controller may be configured to retransmit the request signal when failing to obtain the information indicating the air pressure of the tire in the predetermined amount of time.

In a second aspect of the present disclosure, an air pressure adjusting method is provided that adjusts an air pressure of a tire of a vehicle by using a piston. The piston is configured to supply air to the tire by being moved by rotation of the tire. The air pressure adjusting method includes: receiving, by using a reception circuit, a detection signal transmitted from an air pressure monitoring device mounted on the vehicle, the detection signal including information indicating the air pressure of the tire; obtaining the information indicating the air pressure of the tire from the detection signal received by the reception circuit; prohibiting movement of the piston when the air pressure of the tire is greater than or equal to a threshold; and allowing movement of the piston when the air pressure of the tire is less than the threshold.

When the air pressure of the tire is greater than or equal to the threshold, movement of the piston is prohibited. Prohibition of movement of the piston suppresses the wear of the piston due to movement of the piston.

In a third aspect of the present disclosure, an air pressure adjusting system is provide that includes an air pressure monitoring device and an air pressure adjusting device. The air pressure monitoring device is mounted on a vehicle. The air pressure monitoring device is configured to transmit a detection signal. The detection signal includes information indicating an air pressure of a tire of the vehicle. The air pressure adjusting device includes a supplying device, a reception circuit, a switching unit, and a controller. The supplying device includes a piston. The piston is configured to supply air to the tire by being moved by rotation of the tire. The reception circuit is configured to receive the detection signal. The switching unit iss configured to be switched between a first state, in which the switching unit allows movement of the piston, and a second state, in which the switching unit prohibits movement of the piston. The controller is configured to control the switching unit. The controller is configured to obtain the information indicating the air pressure of the tire from the detection signal received by the reception circuit. The controller is also configured to switch the switching unit to the second state when the air pressure of the tire is greater than or equal to a threshold. The controller is further configured to switch the switching unit to the first state when the air pressure of the tire is less than the threshold.

When the air pressure of the tire is greater than or equal to the threshold, movement of the piston is prohibited. Prohibition of movement of the piston suppresses the wear of the piston due to movement of the piston.

### BRIEF DESCRIPTION OF DRAWINGS

Fig. 1 is a schematic diagram showing an air pressure adjusting system according to a first embodiment.
Fig. 2 is a schematic diagram showing a transmitter and a control unit.
Fig. 3 is a schematic diagram showing an air pressure adjusting device mounted on the vehicle shown in Fig. 1.
Fig. 4 is a perspective view showing a supplying device of the air pressure adjusting device shown in Fig. 3.
Fig. 5 is a front view of a cam ring of the supplying device shown in Fig. 4.
Fig. 6 is a cross-sectional view of a pump of the supplying device shown in Fig. 4.
Fig. 7 is a schematic diagram showing the air pressure adjusting device mounted on the vehicle shown in Fig. 1.
Fig. 8 is a flowchart showing a response-transmission process performed by the transmitter shown in Fig. 2.
Fig. 9 is a flowchart showing a switching process performed by the control unit shown in Fig. 2.
Fig. 10 is a timing diagram illustrating operation of the air pressure adjusting system according to the first embodiment.
Fig. 11 is a schematic diagram showing a receiver according to a second embodiment.
Fig. 12 is a timing diagram illustrating operation of the air pressure adjusting system according to the second embodiment.

### DESCRIPTION OF EMBODIMENTS

### First Embodiment

An air pressure adjusting device, an air pressure adjusting method, and an air pressure adjusting system according to a first embodiment will now be described.

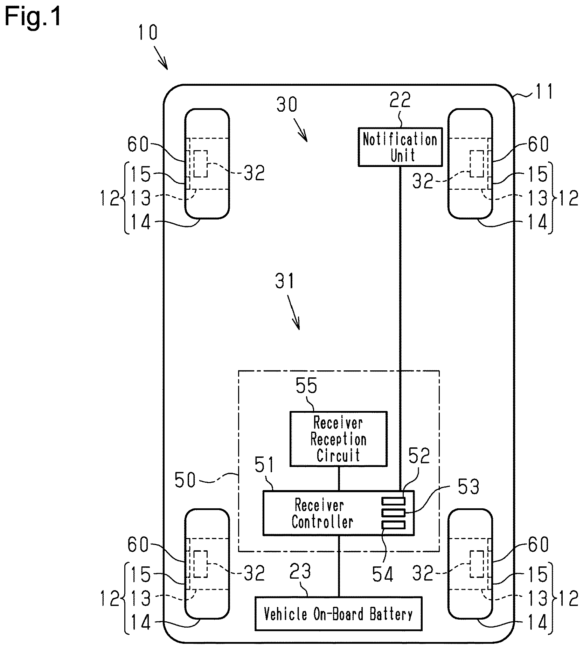

As shown in Fig. 1, a vehicle 10 includes a vehicle body 11, wheel units 12, an air pressure adjusting system 30, a notification unit 22, and a vehicle on-board battery 23. The number of the wheel units 12 is four. The wheel units 12, of which there are four, have identical structures. Each wheel unit 12 includes a wheel 13, a tire 14, and a wheel cap 15. The tire 14 is attached to the wheel 13.

The air pressure adjusting system 30 includes an air pressure monitoring device 31 and air pressure adjusting devices 60. The air pressure monitoring device 31 is mounted on the vehicle 10. The air pressure monitoring device 31 includes transmitters 32 and a receiver 50.

The number of the transmitters 32 is equal to the number of the wheel units 12. The transmitters 32 are respectively provided in the four tires 14. Specifically, each transmitter 32 is provided in the corresponding wheel unit 12 to be arranged in the internal space of the tire 14. The transmitter 32 may be fixed to a tire valve. The transmitter 32 may be fixed to the wheel 13. The transmitter 32 may be fixed to the tire 14.

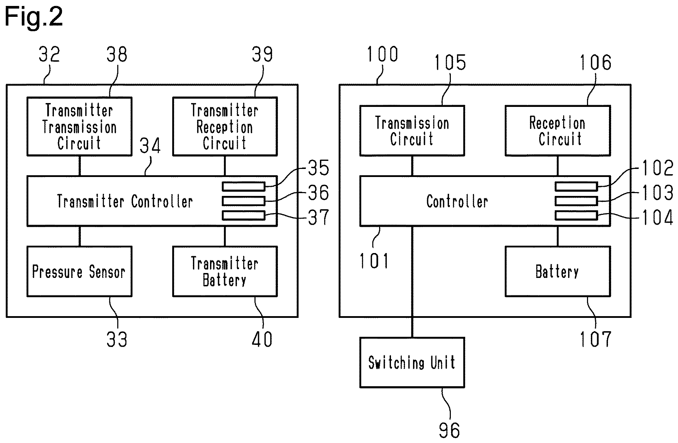

As shown in Fig. 2, each transmitter 32 includes a pressure sensor 33, a transmitter controller 34, a transmitter transmission circuit 38, a transmitter reception circuit 39, and a transmitter battery 40.

The pressure sensor 33 detects an air pressure of the tire 14.

The transmitter controller 34 includes a processor 35, a memory unit 36, and a timer 37. The processor 35 may be, for example a central processing unit (CPU), a graphics processing unit (GPU), or a digital signal processor (DSP). The memory unit 36 includes a random-access memory (RAM) and a read-only memory (ROM). The memory unit 36 stores program codes or commands configured to cause the processor 35 to perform processes. The memory unit 36, which is a computer-readable medium, includes any type of medium that is accessible by a general-purpose computer or a dedicated computer. The transmitter controller 34 may include a hardware circuit such as an application specific integrated circuit (ASIC) and a field programmable gate array (FPGA). The transmitter controller 34, which is processing circuitry, may include one or more processors that operate according to a computer program, one or more hardware circuits such as an ASIC and an FPGA, or a combination thereof. The timer 37 measures time.

The memory unit 36 stores an ID code indicating individual identification information of each of the transmitters 32.

The transmitter controller 34 generates transmission data. The transmission data is digital data. The transmission data includes data having a format specified by a protocol. The transmission data includes an ID code and pressure data. The pressure data indicates the air pressure of the tire 14. The pressure data is obtained from the pressure sensor 33.

The transmitter transmission circuit 38 transmits wireless signals. The wireless signals have been modulated in accordance with transmission data from the transmitter controller 34. The wireless signals include detection signals, specifically, a first detection signal and a second detection signal. In the present embodiment, the first detection signal and the second detection signal are the same wireless signal. The first detection signal and the second detection signal may be different from each other. In the following description, the first detection signal and the second detection signal will be referred to as detection signals when they are not distinguished from each other. The detection signals are also referred to as state signals (a first state signal and a second state signal). The first detection signal is a wireless signal intended to be received by the receiver 50. The second detection signal is a wireless signal intended to be received by the pressure adjusting devices 60. The detection signals each include information indicating the air pressure of the tire 14 and an ID code. The detection signals are in an RF band, for example, a 315 MHz band or a 434 MHz band.

The transmitter reception circuit 39 receives wireless signals transmitted to the transmitter 32. The wireless signals transmitted to the transmitter 32 include, for example, a request signal. The request signal includes a command to the transmitter 32. The transmitter reception circuit 39 demodulates wireless signals.

The transmitter controller 34 obtains data obtained through demodulation of a wireless signal from the transmitter reception circuit 39. The transmitter controller 34 continuously performs reception operation to activate the transmitter reception circuit 39. When receiving a wireless signal during the reception operation, the transmitter reception circuit 39 demodulates the received wireless signal.

The transmitter battery 40 supplies power that activates the transmitter 32 to the transmitter 32. In the present embodiment, the transmitter battery 40 is a primary battery. The transmitter battery 40 may use at least one of a rechargeable battery or a power generating element.

As shown in Fig. 1, the receiver 50 includes a receiver controller 51 and a receiver reception circuit 55.

The receiver controller 51 includes a processor 52, a memory unit 53, and a timer 54. The processor 52 may be, for example a CPU, a GPU, or a DSP. The memory unit 53 includes a RAM and a ROM. The memory unit 53 stores program codes or commands configured to cause the processor 52 to perform processes. The memory unit 53, which is a computer-readable medium, includes any type of medium that is accessible by a general-purpose computer or a dedicated computer. The receiver controller 51 may include a hardware circuit such as an ASIC and an FPGA. The receiver controller 51, which is processing circuitry, may include one or more processors that operate according to a computer program, one or more hardware circuits such as an ASIC and an FPGA, or a combination thereof. The timer 54 measures time.

The memory unit 53 stores the ID codes of all the transmitters 32. The ID codes of the respective transmitters 32 are stored in the memory unit 53 in association with the positions of the transmitters 32. The position of each transmitter 32 refers to the position of the wheel unit 12 in which that particular transmitter 32 is provided. The memory unit 53 stores ID codes respectively associated with the transmitter 32 provided in the left front wheel unit 12 and the transmitter 32 provided in the left rear wheel unit 12. The memory unit 53 stores ID codes respectively associated with the transmitter 32 provided in the right front wheel unit 12 and the transmitter 32 provided in the right rear wheel unit 12.

The receiver reception circuit 55 receives wireless signals transmitted to the receiver 50. The wireless signals transmitted to the receiver 50 include, for example, the first detection signal. The receiver reception circuit 55 demodulates the wireless signals.

The receiver controller 51 obtains, from the receiver reception circuit 55, data obtained through demodulation of the wireless signals. The receiver controller 51 continuously performs reception operation to activate the receiver reception circuit 55. When receiving a wireless signal during the reception operation, the receiver reception circuit 55 demodulates the received wireless signal. When the receiver reception circuit 55 receives the first detection signal, the receiver controller 51 demodulates the first detection signal to obtain the transmission data. Accordingly, the receiver controller 51 acquires the air pressures and the ID codes of the tires 14.

The notification unit 22 notifies occupants of the vehicle 10 of the air pressures of the tires 14. The notification unit 22 may be a display unit. The display unit may display the air pressures of the tires 14. Alternatively, the display unit may display a warning message when the air pressure of any of the tires 14 is less than the threshold. The notification unit 22 may be a buzzer. The buzzer generates sound when the air pressure of any of the tires 14 is less than the threshold. The notification unit 22 is controlled by the receiver controller 51.

The vehicle on-board battery 23 is a power source for electrical components. The receiver 50 is driven by power supplied from the vehicle on-board battery 23. The vehicle on-board battery 23 may be, for example, a rechargeable battery.

The air pressure adjusting device 60 will now be described.

The number of the air pressure adjusting devices 60 is equal to the number of the wheel units 12. The air pressure adjusting devices 60 are respectively provided in the four wheel units 12. Each air pressure adjusting device 60 adjusts the air pressure of the corresponding tire 14 as the vehicle 10 travels.

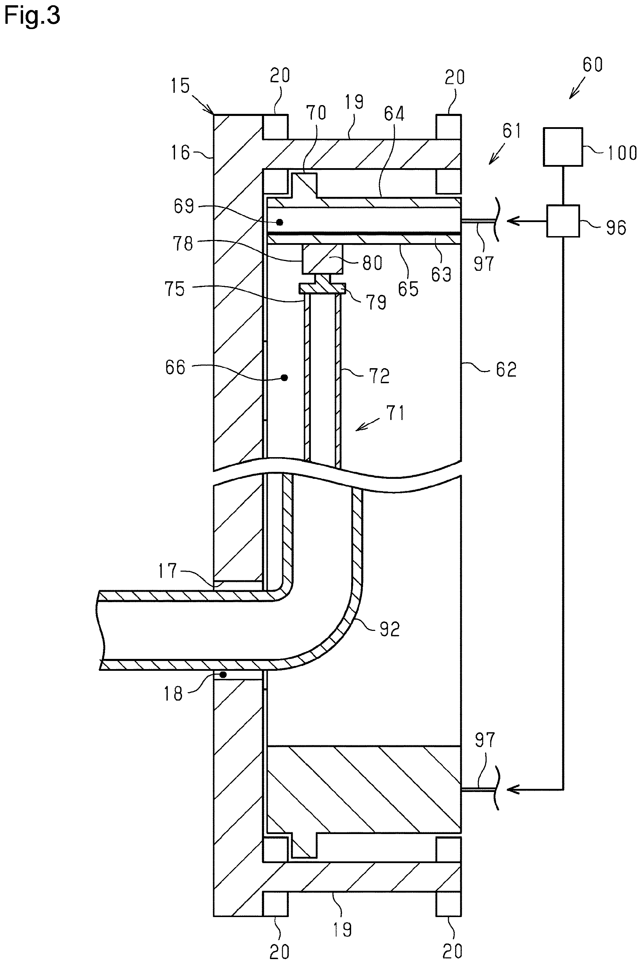

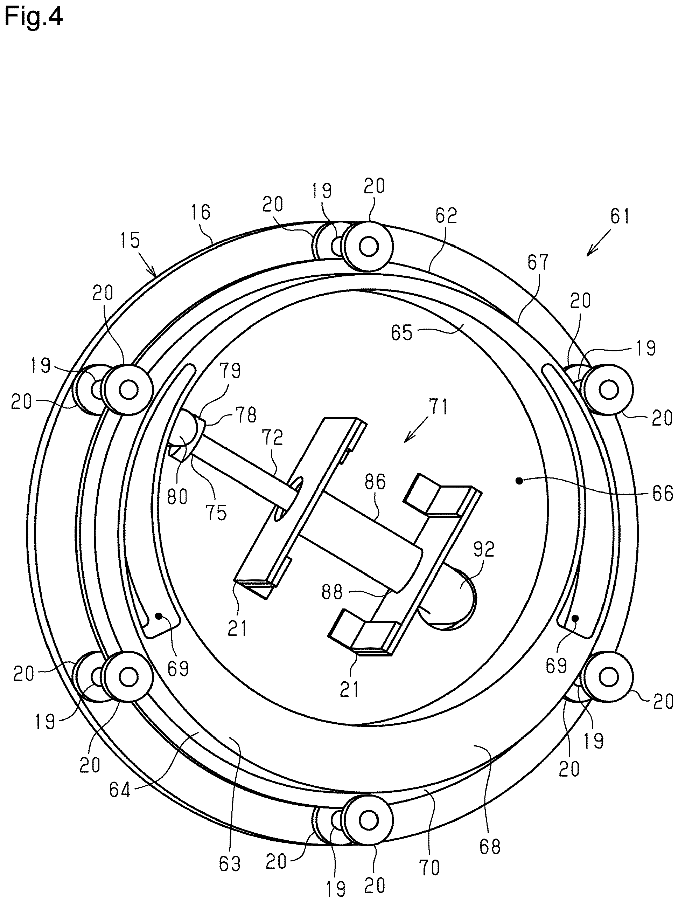

As shown in Figs. 3 and 4, each air pressure adjusting device 60 includes a supplying device 61, a switching unit 96, and a control unit 100. The supplying device 61 includes a pump 71 and a cam ring 62.

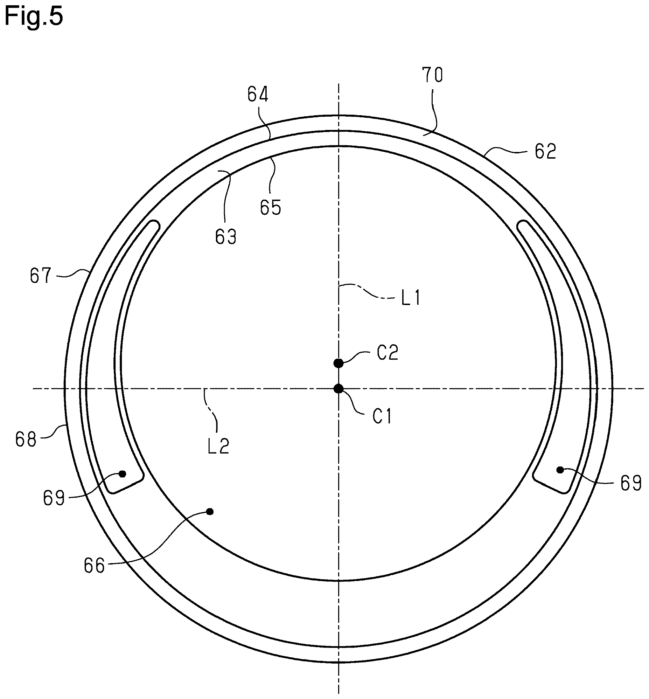

As shown in Figs. 4 and 5, the cam ring 62 includes a first region 63 and a second region 70. The first region 63 is annular. The first region 63 includes an outer circumferential surface 64, an inner circumferential surface 65, a first section 67, and a second section 68. An area 66 surrounded by the inner circumferential surface 65 is a hole that extends through the cam ring 62. A center C1 of a circle defined by the outer circumferential surface 64 and a center C2 of a circle defined by the inner circumferential surface 65 are displaced from each other. In other words, the center C1 of the first region 63 and the center C2 of the area 66 are displaced from each other. The dimension between the inner circumferential surface 65 and the outer circumferential surface 64 changes depending on the position in the circumferential position of the first region 63. The dimension between the inner circumferential surface 65 and the outer circumferential surface 64 is longer in a region in which the distance between the center C2 of the area 66 and the outer circumferential surface 64 is greater. As viewed in the axial direction of the cam ring 62, a line segment that passes through the center C1 of the first region 63 and the center C2 of the area 66 is referred to as a line segment L1. A line segment that is orthogonal to the line segment L1 and passes through the center C1 of the first region 63 is referred to as the line segment L2. The first region 63 is divided into two parts by the line segment L2. Of the divided two parts of the first region 63, the part on the side of the center C1 of the first region 63 in which the center C2 of the area 66 is located is the first section 67. Of the divided two parts of the first region 63, the part on the side of the center C1 of the first region 63 that is on the side opposite to the center C2 of the area 66 is the second section 68. The second section 68 is heavier than the first section 67. The first region 63 has holes 69. The holes 69 are formed to reduce the weight of the cam ring 62. The holes 69 can be formed within a range in which the second section 68 remains heavier than the first section 67.

The second region 70 extends outward in the radial direction of the first region 63 from the outer circumferential surface 64 of the first region 63. The radial direction of the first region 63 refers to a direction that is oriented from the center C1 of the first region 63 toward the outer circumferential surface 64 of the first region 63. The second region 70 is annular. The center of the second region 70 agrees with the center C1 of the first region 63. The dimension of the second region 70 in the axial direction is shorter than the dimension of the first region 63 in the axial direction. The outer circumferential surface 64 of the first region 63 is located on the opposite sides of the second region 70. The cam ring 62 is symmetrical with respect to the line segment L1.

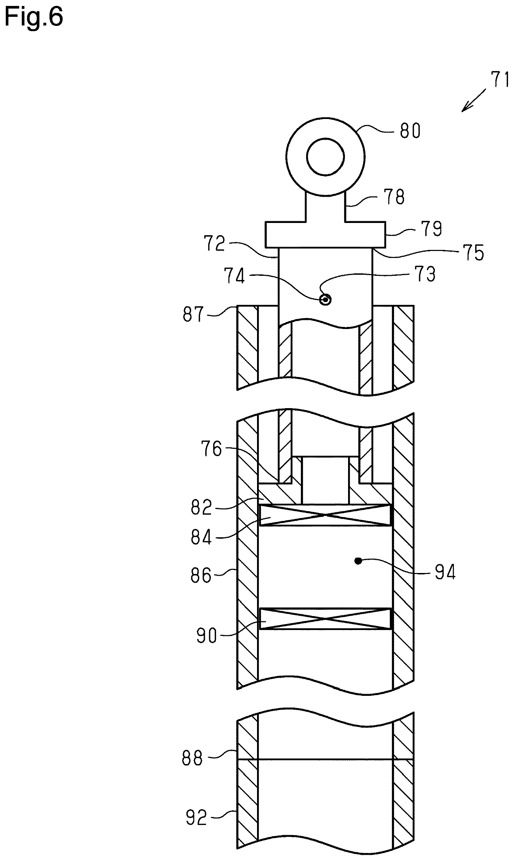

As shown in Fig. 6, the pump 71 includes a rod 72, a contact portion 78, a piston 82, a suction check valve 84, a cylinder 86, a discharge check valve 90, a discharge portion 92, and a suction chamber 94.

The rod 72 has an annular cross-sectional shape. The term "annular" may refer to any structure that forms a loop, which is a continuous shape with no ends, as well as a generally loop-shaped structure with a gap, such as a C-shape. "Annular" shapes include but are not limited to a circular shape, an elliptic shape, and a polygonal shape with sharp or rounded corners. The interior of the rod 72 is a passage through which air flows. The rod 72 includes a defining surface 73. The defining surface 73 extends between the outer surface and the inner surface of the rod 72. The defining surface 73 defines a suction port 74. The suction port 74 connects the exterior of the rod 72 and the interior of the rod 72. The rod 72 includes a first end 75 and a second end 76. The first end 75 and the second end 76 are separated from each other in the axial direction of the rod 72.

The contact portion 78 is provided at the first end 75 of the rod 72. The contact portion 78 includes an attachment portion 79 and a cam contacting portion 80. The attachment portion 79 is attached to the first end 75 of the rod 72. The cam contacting portion 80 is circular. The cam contacting portion 80 is rotatably attached to the attachment portion 79.

The piston 82 is provided at the second end 76 of the rod 72. The piston 82 has an annular cross-sectional shape. The interior of the piston 82 is a passage through which air flows. The interior of the piston 82 and the interior of the rod 72 are connected to each other. The rod 72, the contact portion 78, and the piston 82 are integrated.

The suction check valve 84 is provided in the rod 72. The suction check valve 84 limits the direction in which the air in the rod 72 flows. The suction check valve 84 allows air to flow in a direction from the first end 75 toward the second end 76. The suction check valve 84 prohibits air from flowing in a direction from the second end 76 toward the first end 75.

The cylinder 86 has an annular cross-sectional shape. The cylinder 86 includes a first end 87 and a second end 88. The first end 87 and the second end 88 are separated from each other in the axial direction of the cylinder 86. The interior of the cylinder 86 is a passage through which air flows.

The discharge check valve 90 is provided in the cylinder 86. The discharge check valve 90 limits the direction in which the air in the cylinder 86 flows. The discharge check valve 90 allows air to flow in a direction from the first end 87 toward the second end 88. The discharge check valve 90 prohibits air from flowing in a direction from the second end 88 toward the first end 87.

The discharge portion 92 is provided at the second end 88 of the cylinder 86. The discharge portion 92 has an annular cross-sectional shape. The interior of the discharge portion 92 is a passage through which air flows. The interior of the cylinder 86 and the interior of the discharge portion 92 are connected to each other.

The rod 72 is inserted into the cylinder 86. The second end 76 of the rod 72 is located inside the cylinder 86. The first end 75 of the rod 72 protrudes out of the cylinder 86 from the first end 87 of the cylinder 86. The piston 82 is provided in the cylinder 86. The suction chamber 94 is defined between the piston 82 and the discharge check valve 90. As the rod 72 moves, the piston 82 moves in the cylinder 86. Movement of the piston 82 changes the volume of the suction chamber 94. Change in the pressure of the suction chamber 94 opens the discharge check valve 90. Accordingly, air is discharged from the discharge portion 92.

As shown in Figs. 3 and 4, the supplying device 61 is attached to the wheel cap 15. The wheel cap 15 includes a cap body 16, shaft portions 19, bearings 20, and brackets 21. The cap body 16 is circular. The cap body 16 includes a defining surface 17. The defining surface 17 defines a hole 18, which extends through the cap body 16. The shaft portions 19 are spaced apart from each other along the circumference of the wheel cap 15. Each shaft portion 19 is provided with two of the bearings 20. The two bearings 20 of each shaft portion 19 are spaced apart from each other in the axial direction of the shaft portion 19. The distance between the two bearings 20 is longer than the dimension of the second region 70 in the axial direction.

The cam ring 62 is attached to the wheel cap 15 such that the second region 70 is located between the two bearings 20 of each shaft portion 19. The bearings 20 rotatably support the cam ring 62. Since the bearings 20 rotatably support the cam ring 62, the cam ring 62 does not rotate when the wheel cap 15 rotates. Specifically, even if the wheel cap 15 rotates, the cam ring 62 is maintained in a state in which the second section 68 is located below the first section 67. The second region 70 is movable between two sets of the bearings 20. When the second region 70 moves between the two sets of the bearings 20, the whole cam ring 62 moves.

The pump 71 is configured to rotate together with the wheel cap 15. The pump 71 is attached to the wheel cap 15 with the brackets 21. The pump 71 is located in the area 66. The pump 71 is installed such that rotation of the wheel cap 15 changes the distance between the first end 87 of the cylinder 86 and the inner circumferential surface 65 of the first region 63. For example, the pump 71 is attached to the wheel cap 15 such that the center in the axial direction of the cylinder 86 is displaced from the center C1 of the first region 63. The discharge portion 92 is inserted into the hole 18. The discharge portion 92 extends through the cap body 16.

The wheel cap 15 is attached to the wheel 13 such that the supplying device 61 is located between the wheel cap 15 and the wheel 13. The discharge portion 92 is configured to supply air that has been discharged from the discharge portion 92 into the tire 14. For example, the discharge portion 92 may be connected to the tire valve with a tubular member through which air can flow, thereby allowing air discharged from the discharge portion 92 to be supplied into the tire 14. The wheel 13 may be provided with a hole that is connected to the discharge portion 92.

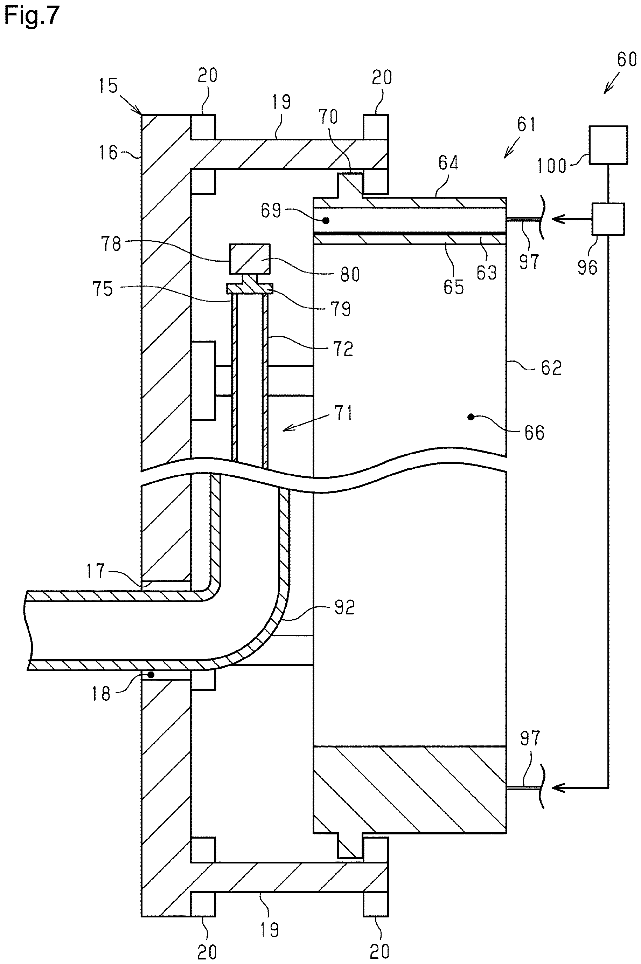

The switching unit 96 moves the cam ring 62 to a first position or a second position. The second position is farther from the wheel cap 15 than the first position. When the cam ring 62 is located at the first position as shown in Fig. 3, the cam contacting portion 80 is in contact with the inner circumferential surface 65 of the first region 63. When the cam ring 62 is located at the second position as shown in Fig. 7, the cam contacting portion 80 is separated from the inner circumferential surface 65 of the first region 63. The switching unit 96 is, for example, an actuator. The switching unit 96 includes rods 97. The rods 97 are movable in the axial direction of the rods 97. Movement of the rods 97 in the axial direction causes the cam ring 62 to move between the first position and the second position.

When the wheel cap 15 rotates with the cam ring 62 at the first position, the cam ring 62 serves as a cam so as to cause the rod 72 to reciprocate. Movement of the piston 82 within the cylinder 86 causes the discharge portion 92 to discharge air. The air discharged from the discharge portion 92 is supplied into the tire 14. The pump 71 of the present embodiment converts rotation of the wheel units 12 into linear motion of the rod 72, thereby discharging air. The switching unit 96 changes the relative positions of the cam ring 62 and the pump 71, thereby switching the cam contacting portion 80 and the inner circumferential surface 65 between a contacting state and a separated state.

As shown in Fig. 2, each control unit 100 includes a controller 101, a transmission circuit 105, a reception circuit 106, and a battery 107.

The controller 101 includes a processor 102, a memory unit 103, and a timer 104. The processor 102 may be, for example a CPU, a GPU, or a DSP. The memory unit 103 includes a RAM and a ROM. The memory unit 103 stores program codes or instructions configured to cause the processor 102 to perform processes. The memory unit 103, which is a computer-readable medium, includes any type of medium that is accessible by a general-purpose computer or a dedicated computer. The controller 101 may include a hardware circuit such as an ASIC and an FPGA. The controller 101, which is processing circuitry, may include one or more processors that operate according to a computer program, one or more hardware circuits such as an ASIC and an FPGA, or a combination thereof. The timer 104 measures time.

The memory unit 103 of each air pressure adjusting device 60 stores the ID code of the transmitter 32 provided in the wheel unit 12 in which the air pressure adjusting device 60 is provided. The memory unit 103 of the air pressure adjusting device 60 provided in the left front wheel unit 12 stores the ID code of the transmitter 32 in the left front wheel unit 12.

The controller 101 controls the switching unit 96. If the switching unit 96 is an actuator that converts rotation of a motor into linear motion of the rods 97, the controller 101 controls the motor so as to control the switching unit 96. The controller 101 selectively switches the switching unit 96 between a first state, in which the switching unit 96 moves the cam ring 62 to the first position, and a second state, in which the switching unit 96 moves the cam ring 62 to the second position. In other words, the controller 101 selectively switches the switching unit 96 between the first state, in which the switching unit 96 allows movement of the piston 82, and the second state, in which the switching unit 96 prohibits movement of the piston 82.

The transmission circuit 105 transmits a request signal. The request signal is a wireless signal that requests the transmitter 32 to return the detection signal, more specifically, the second detection signal. The request signal may be any signal as long as it can be received by the transmitter reception circuit 39. For example, a signal in an LF band is used as the request signal. A signal in an LF band may be, for example, a signal of 125 kHz.

The reception circuit 106 receives the second detection signal transmitted from the transmitter 32. The reception circuit 106 demodulates the second detection signal.

The controller 101 obtains, from the reception circuit 106, transmission data obtained through demodulation of the second detection signal. The controller 101 performs reception operation to activate the reception circuit 106. When receiving the second detection signal during the reception operation, the reception circuit 106 demodulates the received second detection signal.

The battery 107 supplies power to the transmitter 32 to activate the transmitter 32. The battery 107 may be, for example, a primary battery, a rechargeable battery, or a power generating element.

Processes performed by the air pressure adjusting system 30 will now be described.

A response-transmission process performed by the transmitter controller 34 will now be described. The response-transmission process is a process in which, when receiving a request signal from the air pressure adjusting device 60, the transmitter controller 34 returns the second detection signal in response to the request signal. The response-transmission process is repeatedly performed at a predetermined control period.

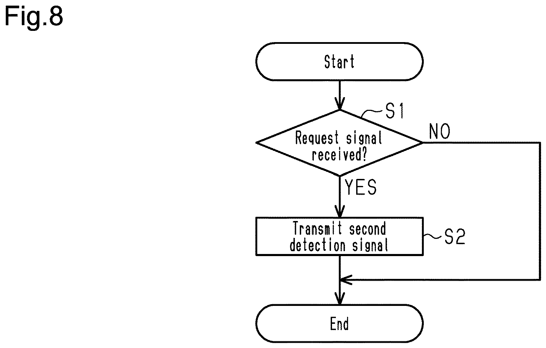

As shown in Fig. 8, the transmitter controller 34 determines whether the transmitter controller 34 has received a request signal in step S1. If the determination result of step S1 is affirmative, the transmitter controller 34 performs the process of step S2. If the determination result of step S1 is negative, the transmitter controller 34 ends the response-transmission process.

In step S2, the transmitter controller 34 transmits the second detection signal. When finishing the process of step S2, the transmitter controller 34 ends the response-transmission process.

A switching process performed by the controller 101 will now be described. The switching process is a process in which the controller 101 selectively switches, in accordance with the air pressure of the tire 14, the switching unit 96 between the first state, in which the switching unit 96 allows movement of the piston 82, and the second state, in which the switching unit 96 prohibits movement of the piston 82. The controller 101 repeatedly performs the switching process at a predetermined control period. When the controller 101 performs the switching process, the air pressure of the tire 14 is adjusted by an air pressure adjusting method that uses the piston 82 of the air pressure adjusting device 60.

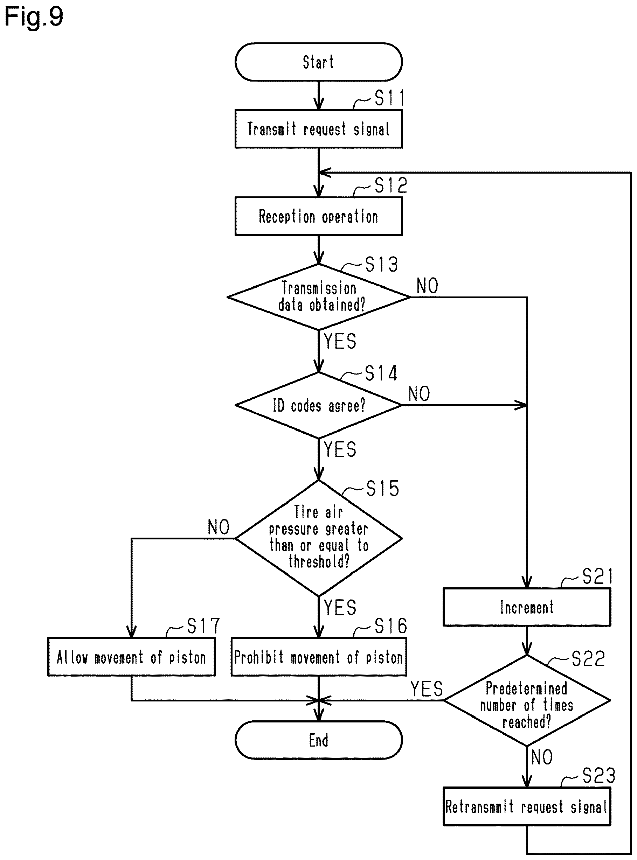

As shown in Fig. 9, the controller 101 transmits a request signal in step S11.

Next, the controller 101 performs a reception operation in step S12. The reception operation is performed for a predetermined amount of time. The predetermined amount of time is set such that the second detection signal, which is returned in response to the request signal, can be received. For example, the predetermined amount of time is obtained by adding a margin to the time from when the request signal is transmitted till when the second detection signal is received. When the reception circuit 106 receives the second detection signal during the reception operation, the controller 101 obtains transmission data that is obtaind by demodulating the second detection signal. This allows the controller 101 to obtain information indicating the air pressure of the tire 14 from the second detection signal.

Next, in step S13, the controller 101 determines whether the controller 101 has obtained the transmission data. If the determination result of step S13 is affirmative, the controller 101 performs the process of step S14. If the determination result of step S13 is negative, the controller 101 performs the process of step S21.

In step S14, the controller 101 checks whether the ID code in the transmission data agrees with the ID codes stored in the memory unit 103. That is, the controller 101 determines whether the wheel unit 12 in which the controller 101 is provided is the same as the wheel unit 12 incorporating the transmitter 32 that has transmitted the second detection signal. If the ID code included in the transmission data and the ID code stored in the memory unit 103 agree with each other, the controller 101 determines that the wheel unit 12 incorporating the controller 101 is the same as the wheel unit 12 incorporating the transmitter 32 that has transmitted the second detection signal. If the determination result of step S14 is affirmative, the controller 101 performs the process of step S15. If the determination result of step S14 is negative, the controller 101 performs the process of step S21.

In step S15, the controller 101 determines whether the air pressure of the tire 14 is greater than or equal to the threshold. The threshold may be, for example, a recommended air pressure set for the tires 14. The threshold may vary in accordance with at least one of the traveling condition of the vehicle 10 or the traveling location of the vehicle 10. The traveling condition of the vehicle 10 is, for example, the speed of the vehicle 10. The traveling location of the vehicle 10 may be an expressway or a general road. If the determination result of step S15 is affirmative, the controller 101 performs the process of step S16. If the determination result of step S15 is negative, the controller 101 performs the process of step S17.

In step S16, the controller 101 controls the switching unit 96 to prohibit movement of the piston 82. If the cam ring 62 is at the first position, the controller 101 switches the switching unit 96 to the second state, so as to move the cam ring 62 to the second position. If the cam ring 62 is at the second position, the controller 101 maintains the switching unit 96 in the second state, so as to maintain the cam ring 62 in the second position. Since the contact portion 78 is no longer in contact with the cam ring 62, movement of the piston 82 is prohibited. In the present embodiment, prohibition of movement of the piston 82 refers to prohibition of movement of the piston 82 by the cam ring 62. The piston 82 can be moved by centrifugal force generated by rotation of the wheel 13 and the weight of the piston 82.

In step S17, the controller 101 controls the switching unit 96 to allow movement of the piston 82. If the cam ring 62 is at the second position, the controller 101 switches the switching unit 96 to the first state, so as to move the cam ring 62 to the first position. If the cam ring 62 is at the first position, the controller 101 maintains the switching unit 96 in the first state, so as to maintain the cam ring 62 in the first position. Since the contact portion 78 comes into contact with the cam ring 62, movement of the piston 82 by the cam ring 62 is allowed.

In step S21, the controller 101 increments the number of times the transmission data has not been obtained. The transmission data is obtained from the transmitter 32 provided in the wheel unit 12 that is the same as the wheel unit 12 that incorporates the controller 101. Thus, when the determination result of step S14 is negative, the process of step S21 is performed even if the determination result of step S13 is affirmative. The controller 101 counts the number of times the determination result of step S13 has been negative and the number of times the determination result of step S14 has been negative. The number of times the transmission data has not been obtained is reset when the switching process is ended.

Next, in step S22, the controller 101 determines whether the number of times the transmission data has not been obtained has reached a predetermined number of times. The predetermined number of times may be set to any number. The predetermined number of times is, for example, one to three. If the determination result of step S22 is affirmative, the controller 101 ends the switching process. If the determination result of step S22 is negative, the controller 101 performs the process of step S23.

In step S23, the controller 101 retransmits the request signal. When finishing the process of step S23, the controller 101 advances the process to step S12.

Operation of the first embodiment will now be described.

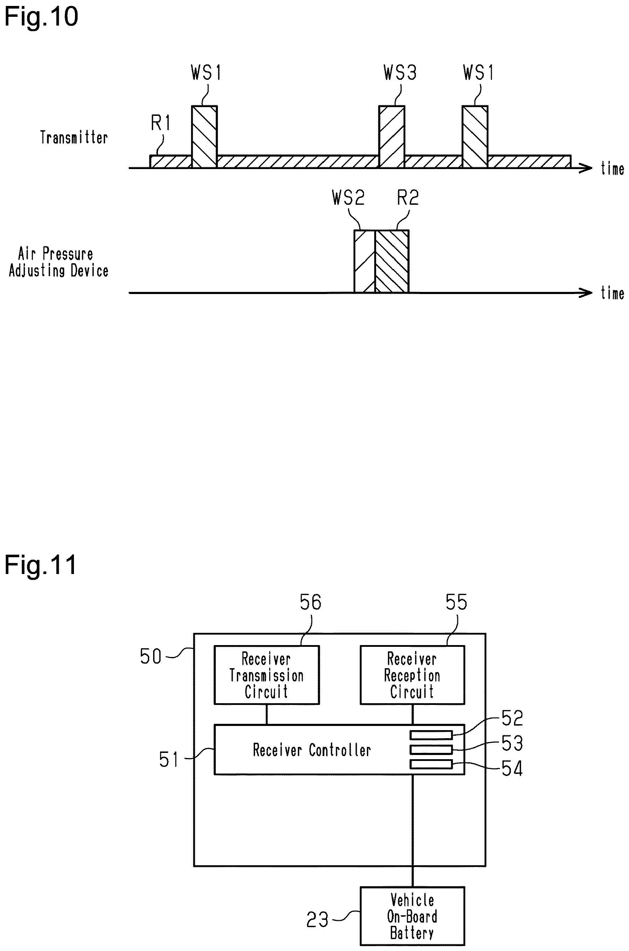

As shown in Fig. 10, the transmitter controller 34 transmits a first detection signal WS1 at predetermined intervals. The receiver controller 51 is capable of periodically acquiring the air pressure of the tire 14. This allows the air pressure monitoring device 31 to monitor the air pressure of the tire 14. The transmitter controller 34 continuously performs reception operation R1. The controller 101 transmits a request signal WS2. After transmitting the request signal WS2, the controller 101 performs a reception operation R2 for a predetermined amount of time. When receiving the request signal WS2 at the transmitter 32, the transmitter controller 34 returns a second detection signal WS3 in response to the request signal WS2. The controller 101 acquires the air pressure of the tire 14 based on the second detection signal WS3, which has been returned in response to the request signal WS2. The controller 101 controls the switching unit 96 in accordance with the air pressure of the tire 14.

The first embodiment has the following advantages.

(1-1) The controller 101 prohibits movement of the piston 82 when the air pressure of the tire 14 is greater than or equal to the threshold. The controller 101 allows movement of the piston 82 when the air pressure of the tire 14 is less than the threshold. Movement of the piston 82 is allowed when the air pressure of the tire 14 is less than the threshold, and movement of the piston 82 supplies air to the tire 14. This adjusts the air pressure of the tire 14. When the air pressure of the tire 14 is greater than or equal to the threshold, the tire 14 does not need to be supplied with air. When the tire 14 does not need to be supplied with air, movement of the piston 82 is prohibited. Thus, as compared to a configuration that always allows movement of the piston 82, the wear of the piston 82 is suppressed.

(1-2) After transmitting the request signal, the controller 101 performs the reception operation for the predetermined amount of time. The request signal is transmitted intermittently. Accordingly, the reception operation is performed intermittently. Since the controller 101 performs the reception operation intermittently, the power consumption by the reception operation is reduced as compared to a configuration that continuously performs the reception operation. This extends the time until the battery 107 becomes exhausted.

(1-3) The controller 101 transmits the request signal to the transmitter 32. Specifically, the controller 101 transmits the request signal to the transmitter 32 provided in the wheel unit 12 that incorporates the controller 101. Since the air pressure adjusting device 60 is provided in the wheel unit 12, the distance from the air pressure adjusting device 60 to the transmitter 32 is shorter than the distance from the air pressure adjusting device 60 to the receiver 50. This allows the intensity of the request signal to be reduced as compared to a configuration in which the request signal is received by the receiver 50. Accordingly, the power consumption by transmission of the request signal is reduced. This extends the time until the battery 107 becomes exhausted.

(1-4) If the controller 101 cannot obtain the transmission data in the predetermined amount of time after transmitting the request signal, the controller 101 retransmits the request signal. Even if the controller 101 cannot obtain the transmission data, the controller 101 is capable of retransmitting the second detection signal to the transmitter 32. This allows the controller 101 to easily obtain information indicating the air pressure of the tire 14.

(1-5) The air pressure adjusting method that uses the air pressure adjusting devices 60 allows movement of the piston 82 when the air pressure of the tire 14 is less than the threshold. The air pressure adjusting method prohibits movement of the piston 82 when the air pressure of the tire 14 is greater than or equal to the threshold. As compared to a configuration that always allows movement of the piston 82, the wear of the piston 82 is suppressed.

### Second Embodiment

An air pressure adjusting device, an air pressure adjusting method, and an air pressure adjusting system according to a second embodiment will now be described. Differences from the first embodiment will be described.

As shown in Fig. 11, the receiver 50 includes a receiver transmission circuit 56. The receiver transmission circuit 56 transmits a second detection signal, which has been modulated in accordance with the transmission data from the receiver controller 51. The second detection signal includes information indicating the air pressure of the tire 14. The receiver transmission circuit 56 is configured to transmit the second detection signal upon reception of the request signal. The information indicating the air pressure of the tire 14 can be obtained by demodulating the first detection signal from the transmitter 32. The second detection signal may be the same as or different from the first detection signal.

In the second embodiment, the receiver controller 51 performs the response-transmission process, in place of the transmitter controller 34. A response-transmission process performed by the receiver controller 51 will now be described with reference to Fig. 8. The same process as that in the first embodiment is performed in step S1. In step S2, the receiver controller 51 transmits the second detection signal to the air pressure adjusting device 60 that has transmitted the request signal. At this time, the information obtained from the transmitter 32 that corresponds to the ID code included in the request signal is used as the information indicating the air pressure of the tire 14. Thus, the receiver controller 51 transmits, to the air pressure adjusting device 60 that has transmitted the request signal, the second detection signal including the information that indicates the air pressure of the tire 14 in which the air pressure adjusting device 60 is provided.

The controller 101 performs the switching process. The switching process of the second embodiment is the same as that of the first embodiment except that, in step S11 and step S23, the request signal is transmitted to the receiver 50. When the controller 101 performs the switching process, the air pressure of the tire 14 is adjusted by an air pressure adjusting method that uses the piston 82 of the air pressure adjusting device 60, in the same manner as in the first embodiment.

Operation of the second embodiment will now be described.

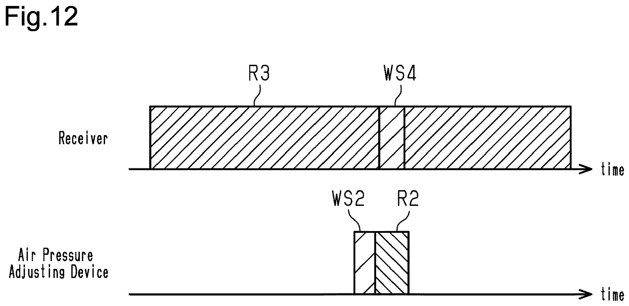

As shown in Fig. 12, the receiver controller 51 continuously performs a reception operation R3. The controller 101 transmits a request signal WS2. After transmitting the request signal WS2, the controller 101 performs a reception operation R2 for a predetermined amount of time. When receiving the request signal WS2, the receiver controller 51 returns a second detection signal WS4 in response to the request signal WS2. The controller 101 acquires the air pressure of the tire 14 based on the second detection signal WS4, which has been returned in response to the request signal WS2. The controller 101 controls the switching unit 96 in accordance with the air pressure of the tire 14.

The second embodiment has the following advantages. In addition to the advantages (1-1), (1-2), (1-4), and (1-5) of the first embodiment, the second embodiment has the following advantage.

(2-1) The controller 101 transmits the request signal to the receiver 50. A primary battery is used as the transmitter battery 40 of the transmitter 32. Therefore, when the transmitter battery 40 of the transmitter 32 becomes exhausted, the transmitter 32 cannot be driven. In contrast, the vehicle on-board battery 23 is charged by a generator mounted on the vehicle 10, the vehicle on-board battery 23 does not become exhausted easily. The request signal is transmitted to the receiver 50 to cause the receiver 50 to transmit the second detection signal. This reduces consumption of the power of the transmitter battery 40 as compared to a configuration that transmits the request signal to the transmitter 32. This extends the time until the transmitter battery 40 becomes exhausted.

The present embodiments may be modified as follows. The embodiments and the following modifications can be combined as long as the combined modifications remain technically consistent with each other.

In the first embodiment, the controller 101 does not necessarily need to transmit the request signal. In this case, the controller 101 continuously performs the reception operation. The controller 101 obtains the information indicating the air pressure of the tire 14 from the detection signal that is periodically transmitted by the transmitter 32 (the first detection signal).

In the second embodiment, the controller 101 does not necessarily need to transmit the request signal. In this case, the controller 101 continuously performs the reception operation. The receiver controller 51 periodically transmits the detection signal (the second detection signal). The controller 101 obtains the information indicating the air pressure of the tire 14 from the detection signal that is periodically transmitted by the receiver 50.

In each of the embodiments, the switching unit 96 may move part of the cam ring 62 to the first position or the second position. Specifically, the cam ring 62 includes a first portion and a second portion. The first portion contacts the contact portion 78 so as to cause the rod 72 to enter the cylinder 86. The first portion and the second portion can be separated from each other. The first portion of the cam ring 62 is moved by the rods 97 to the first position or the second position.

In each of the embodiments, the switching unit 96 may be a solenoid. The solenoid includes a winding and a plunger. The position of the plunger changes depending on whether the winding is energized. The plunger is movable to a position where movement of the piston 82 is prohibited and a position where movement of the piston 82 is allowed. The position where movement of the piston 82 is prohibited is a position where the plunger contacts the piston 82 or the rod 72, so as to prohibit movement of the piston 82. For example, a hole may be formed in the piston 82 or the rod 72, and the plunger may be inserted into the hole to prohibit movement of the piston 82. The position where movement of the piston 82 is allowed is a position where the plunger contacts neither the piston 82 nor the rod 72.

In each of the embodiments, the switching unit 96 may be configured to move the pump 71. In this case, the switching unit 96 moves the pump 71 to a first position or a second position. The first position is a position where the cam contacting portion 80 contacts the inner circumferential surface 65 of the first region 63. The second position is a position where the cam contacting portion 80 does not contact the inner circumferential surface 65 of the first region 63.

In each of the embodiments, the pump 71 may be configured such that the piston 82 in the cylinder 86 is moved by centrifugal force. In this case, a spring is provided in the cylinder 86. The spring is arranged to push the piston 82 in a direction opposite to the direction in which a centrifugal force acts. When the wheel unit 12 rotates, the piston 82 receives a centrifugal force. The centrifugal force moves the piston 82 in the radial direction of the wheel 13. The piston 82 moves in the radial direction of the wheel 13 while compressing the spring. The movement of the piston 82 supplies air to the tire 14. When the wheel unit 12 stops, the restoring force of the spring moves the piston 82 in the direction opposite to the radial direction. The piston 82 is caused to reciprocate by the centrifugal force generated by rotation of the wheel unit 12. In this case, the supplying device 61 does not necessarily need to include the cam ring 62. The above-described solenoid may be used as the switching unit 96.

In each of the embodiments, the supplying device 61 may be attached to a wheel ornament. The wheel ornament is a decorative part for the wheel 13. The wheel ornament is provided, for example, at the center of the wheel 13.

In the first embodiment, the transmitter 32 and the air pressure adjusting device 60 may establish communication using Bluetooth Low Energy (registered trademark: BLE). In this case, the detection signal and the request signal are wireless signals in a 2.4 GHz band. If BLE is used, transmission and reception of wireless signals can be performed by the same device. Accordingly, the transmitter transmission circuit 38 and the transmitter reception circuit 39 can be integrated into one component. Also, the transmission circuit 105 and the reception circuit 106 can be integrated into one component. If BLE is used, the request signal is an advertising signal. The advertising signal is a signal that causes the transmitter 32 that is configured in conformity with the BLE standard to recognize the presence of the air pressure adjusting device 60. Likewise, in the second embodiment, the receiver 50 and the air pressure adjusting device 60 may establish communication using BLE. In this case, the receiver reception circuit 55 and the receiver transmission circuit 56 can be integrated into one component.

In the first embodiment, the controller 101 does not necessarily need to perform the process of step S14. In this case, the intensity of the request signal may be adjusted such that the request signal can be received only by the transmitter 32 provided in the wheel unit 12 that is the same as the wheel unit 12 that incorporates the air pressure adjusting device 60.

In the each of the embodiments, the controller 101 may skip the processes of step S21 to step S23. That is, the controller 101 does not need to retransmit the request signal when failing to obtain the transmission data. In this case, if the determination result of step S13 is negative, the controller 101 ends the switching process. If the determination result of step S14 is negative, the controller 101 ends the switching process.

In each of the embodiments, the first detection signal and the second detection signal may be different wireless signals. For example, wireless signals of different frequencies may be used as the first detection signal and the second detection signal. Alternatively, the first detection signal and the second detection signal may be modulated by different modulation methods.

In the first embodiment, each controller 101 may include, in the request signal, the ID code of the transmitter 32 attached to the wheel unit 12 that incorporates that controller 101. In this case, the controller 101 can designate the transmitter 32 attached to the wheel unit 12 that incorporates the controller 101, and cause that particular transmitter 32 to receive the request signal.

In the second embodiment, the receiver controller 51 may transmit, as a response to the request signal, a detection signal that includes information indicating the air pressures of the four tires 14. In this case, the receiver controller 51 transmits the request signal by associating pieces of information indicating the air pressures of the four tires 14 with the ID codes. Among the pieces of information indicating the air pressures of the four tires 14, the controller 101 obtains a piece of information associated with the ID code that agrees with the ID code stored in the memory unit 103.

In each of the embodiments, the vehicle 10 may include five or more wheel units 12, or three or less wheel units 12. In these cases, the number of the transmitters 32 and the number of the air pressure adjusting devices 60 are changed in accordance with the number of the wheel units 12.

### REFERENCE SIGNS LIST

10...Vehicle, 14...Tire, 30...Air Pressure Adjusting System, 31...Air Pressure Monitoring Device, 32...Transmitter, 50... Receiver, 56... Receiver Transmission Circuit as Transmission Circuit, 60... Air Pressure Adjusting Device, 61... Supplying Device, 82... Piston, 101...Controller

## Claims

1. An air pressure adjusting device, comprising:
a supplying device that includes a piston, the piston being configured to supply air to a tire of a vehicle by being moved by rotation of the tire;
a reception circuit configured to receive a detection signal transmitted from an air pressure monitoring device mounted on the vehicle, the detection signal including information indicating an air pressure of the tire;
a switching unit configured to be switched between a first state, in which the switching unit allows movement of the piston, and a second state, in which the switching unit prohibits movement of the piston; and
a controller configured to control the switching unit, wherein
the controller is configured to
obtain the information indicating the air pressure of the tire from the detection signal received by the reception circuit,
switch the switching unit to the second state when the air pressure of the tire is greater than or equal to a threshold, and
switch the switching unit to the first state when the air pressure of the tire is less than the threshold.

2. The air pressure adjusting device according to claim 1, wherein
the controller is configured to
transmit to the air pressure monitoring device a request signal that requests transmission of the detection signal, and
perform a reception operation for a predetermined amount of time after transmitting the request signal, the controller obtaining the information indicating the air pressure of the tire in the reception operation.

3. The air pressure adjusting device according to claim 2, wherein
the air pressure monitoring device includes:
a transmitter provided in each tire, the transmitter being configured to transmit the detection signal; and
a receiver configured to receive the detection signal, and
the controller is configured to transmit the request signal to the transmitter.

4. The air pressure adjusting device according to claim 2, wherein
the detection signal includes a first detection signal and a second detection signal,
the air pressure monitoring device includes:
a transmitter provided in each tire, the transmitter being configured to transmit the first detection signal; and
a receiver configured to receive the first detection signal,
the controller is configured to transmit the request signal to the receiver, and
the receiver includes a transmission circuit that is configured to transmit the second detection signal upon reception of the request signal.

5. The air pressure adjusting device according to any one of claims 2 to 4, wherein the controller is configured to retransmit the request signal when failing to obtain the information indicating the air pressure of the tire in the predetermined amount of time.

6. An air pressure adjusting method that adjusts an air pressure of a tire of a vehicle by using a piston, the piston being configured to supply air to the tire by being moved by rotation of the tire, the air pressure adjusting method comprising:
receiving, by using a reception circuit, a detection signal transmitted from an air pressure monitoring device mounted on the vehicle, the detection signal including information indicating the air pressure of the tire;
obtaining the information indicating the air pressure of the tire from the detection signal received by the reception circuit;
prohibiting movement of the piston when the air pressure of the tire is greater than or equal to a threshold; and
allowing movement of the piston when the air pressure of the tire is less than the threshold.

7. An air pressure adjusting system, comprising:
an air pressure monitoring device mounted on a vehicle, the air pressure monitoring device being configured to transmit a detection signal, the detection signal including information indicating an air pressure of a tire of the vehicle; and
an air pressure adjusting device that includes
a supplying device that includes a piston, the piston being configured to supply air to the tire by being moved by rotation of the tire;
a reception circuit configured to receive the detection signal; and
a switching unit configured to be switched between a first state, in which the switching unit allows movement of the piston, and a second state, in which the switching unit prohibits movement of the piston; and
a controller configured to control the switching unit, wherein
the controller is configured to
obtain the information indicating the air pressure of the tire from the detection signal received by the reception circuit,
switch the switching unit to the second state when the air pressure of the tire is greater than or equal to a threshold, and
switch the switching unit to the first state when the air pressure of the tire is less than the threshold.
